# EUROPÄISCHE PATENTSCHRIFT

(11) **EP 0 622 183 B1**
(45) Veröffentlichungstag und Bekanntmachung des Hinweises auf die Patenterteilung: **20.10.1999**
(21) Anmeldenummer: 94105988.3
(22) Anmeldetag: 18.04.1994
(51) Int. Cl.: B32B 27/08

(54) **Tiefziehbare, siegelbare, mindestens dreischichtige Recyclingfolie auf Basis von Polyamid und Polyolefinen mit hohem Recyclatanteil**
Deep-drawable, sealable foil of at least three layers, comprising polyamide and polyolefins, with a high proportion of recycled material
Feuille comprenant au moins trois couches, emboutissable et scellable, à base de polyamide et polyoléfine, à haute teneur en matériaux recyclés

(30) Priorität: 30.04.1993 DE 4314212
(43) Veröffentlichungstag der Anmeldung: 02.11.1994
(73) Patentinhaber: WOLFF WALSRODE AKTIENGESELLSCHAFT, D-29699 Walsrode (DE)
(72) Erfinder: Gasse, Andreas S., Dr., D-29664 Walsrode (DE); Klein, Rudi, D-29664 Walsrode (DE); Reiners, Ulrich, Dr., D-29643 Neuenkirchen (DE)
(74) Vertreter: Linkenheil, Dieter

(56) Entgegenhaltungen:
- EP-A- 0 095 150
- EP-A- 0 568 988
- EP-A- 0 583 595
- US-A- 4 668 571
- DATABASE WPI Week 9202, 14. März 1990 Derwent Publications Ltd., London, GB; AN 92-012814 & JP-A-3 262 642 (SHOWA DENKO KK) 22. November 1991
- DATABASE WPI Week 9149, 15. Februar 1990 Derwent Publications Ltd., London, GB; AN 91-356627 & JP-A-3 237 143 (SUMITOMO BAKELITE KK) 23. Oktober 1991

## Beschreibung

Die vorliegende Erfindung betrifft eine recyclierte Folie auf Basis von Polyamid-und Polyolefinfolienabfällen, wie sie beispielsweise bei der Produktion von Verbundfolien anfallen. Die Erfindung ist im Rahmen der stofflichen Verwertung von Produktionsabfällen zu sehen und damit Von hohem ökologischen und ökonomischen Stellenwert. Als tiefziehbare Folie ist sie auf modernen Tiefziehautomaten für die Verpackung von medizinisch-technischen Geräten, Halbzeugen und Fertigteilen und zur Verpackung von Lebensmitteln einsetzbar. Die Erfindung kann vollständig recycled werden.

Nach dem Stand der Technik sind verschiedene Folienaufbauten bekannt, die Scrapmaterial auf Basis von Polyamid und Polyolefinen enthalten. Der Terminus Scrapmaterial meint hier Folienabfälle, wie sie z.B. bei der Herstellung von Verbundfolien anfallen. Das können Randbeschnitte, Anfahrrollen, Schneideabfälle etc. sein, die dann agglomeriert und gegebenenfalls regranuliert werden. Der überwiegeride Teil der Folien, die mit Scrapmaterial gefertigt wurden, sind einschichtige Folien (z.B. JP 04-119809, JP 03-237143), die hier nicht näher betrachtet werden sollen.

EP-A-0,622,182 betrifft mehrschichtige, siegelbare Recyclingfolie aus einer Scrapschicht und einer Siegelschicht.

Im Bereich der Mehrschichtfolien ist die Einarbeitung von Scrapmaterial daraus entstanden, Randbeschnitte, wie sie heim Produktionsprozeß zwingend anfallen, möglichst dem Prozeß wieder zuzuführen. Man spricht hier von Randbeschnittrückführung. Die Idee dabei ist das Scrapmaterial so einzuarbeiten, daß die Eigenschaften der Folie (mechanische, optische Eigenschaften, Durchlässigkeit etc.) möglichst unbeeinträchtigt bleiben. Dies hat zur Folge, daß nur geringe Mengen an Scrapmaterial auf diese Weise eingebracht werden können. Das Scrapmaterial wird entweder in Kleinen Mengen einer in aller Regel innen liegenden Schicht der Folie zugegeben oder als einzelne Schicht zwischen vorhandene Schichten gelegt. Scrapschichten aus Polyamid und Polyolefinen sind morphologisch inhomogen und nach dem Stand der Technik allein nicht tiefziehbar. Aufgrund der Inkompatibilität der sich bildenden Phasen bilden sich schon im spannungslosen Zustand Mikrorisse. Bei Zugbelastungen muß hier ein frühzeitiger Bruch eintreten (Braun, D.: Chemische Prozesse bei der Herstellung und Verarbeitung von Polymerblends; in: Aufbereiten von Polymerblends, VDI Verlag, Düsseldorf (1989), S. 129 ff).

In AU 88-26-473 wird ein Laminat beschrieben, welches in einer Zwischenschicht Scrapmaterial, das von derselben Folie stammt (z.B. Randbeschnitt) aufnehmen kann. Die Thermoformbarkeit des gesamten Verbundes kann hier offensichtlich nur dadurch erreicht werden, daß die inhomogene, zum Aufreißen neigende Scrapschicht beidseitig gestützt wird. Apparative Möglichkeiten der Einkapselung von Scrapschichten werden in GB 2075-914 beschrieben.

In US 4 668 571 wird ein dreischichtiger Aufbau beschrieben, welcher in der innenliegenden Schicht Scrapmaterial der eigenen Folie aufnehmen kann. Zur Erzielung der gewünschten Eigenschaften muß in diesem Fall der Scrapschicht reines Material der angrenzenden Schichten beigemengt werden.

US 4 647 509 beschreibt eine polystyrolhaltige Mehrlagenstruktur, welche in einer ersten und zweiten Schicht so konzipiert ist, daß Scrapmaterial bestehend aus beiden Schichten als Recyclat in die zweite Schicht zurückgeführt werden kann.

Alle diese Folien haben den Nachteil, daß hier nur Scrapmaterial, welches aus derselben Folie stammt, wieder in die Folie zurückgeführt wird und kein Fremdmaterial an Scrap aufgenommen werden kann. Eine siegelbare Folie, die in der Scrapschicht in großen Mengen sowohl eigenes als auch fremdes Scrapmaterial aus Basis von Polyamid und Polyolefinen enthält und tiefziehbar ist, existiert bisher nicht.

Es stellt sich daher die Aufgabe, eine Mehrschichtfolie bereitzustellen, die tiefziehbar und siegelfähig ist und große Mengen an Recyclat auf Basis von Polyamid und Polyolefinen enthält.

Das Recyclat kann dazu alle Polyamid/Polyolefin-Folienabfälle, wie sie z.B. bei der Produktion von Polyamid/Polyolefin-Folien entstehen, unsortiert enthalten. Die zu erfindende Folienstruktur muß also neben ihrer Eigenschaft selbst vollständig recyclierbar sein, in einer Scrapschicht Folienabfälle anderer Polyamid-Polyolefin-Flienstrukturen aufnehmen können.

Die Folie muß tiefziehbar und siegelfähig und damit auf modernen Tiefziehautomaten, sowohl als Deckel- als auch als Muldenfolie für Verpackungsanwendungen einsetzbar sein. Die Folie muß daher auch gute Gleiteigenschaften besitzen.

Die Folie muß sowohl im tiefgezogenen als auch im unverformten Zustand ein optisch homogenes Bild abgeben.

Übertaschenderweise gelang dies durch eine siegelfähige, mehrschichtige Recyclingfolie bestehend aus einer Scrapschicht, einer Siegelschicht und einer Begleitschicht, die entweder zwischen der Scrapschicht und der Siegelschicht oder außen liegend auf der der Siegelschicht abgewandten Seite angeordnet ist, dadurch gekennzeichnet, daß
- die Folie tiefziebar ist,
- die Scrapschicht aus Polyamid/Polyolefin-Recyclat und einem Haftvermittler besteht, wobei der recyclatanteil der Scrapschicht 60 bis 98 Gew.-% und der Haftvermittleranteil 2 bis 40 Gew.-% beträgt,
- das Recyclat einen Polyamidanteil von 3 bis 45 Gew.-% aufweist,
- die Siegelschicht ein- oder mehrschichtig aufgebaut ist und aus polyolefnischem Polymer oder Copolymer besteht, wobei die Schichten gegebenenfalls gleich oder unterschiedlich sind,
- die Begleitschicht aus Polyamid, Polyolefin, EVOH und/oder Haftvermittler bzw. Haftvermittlergemisch besteht.

Das Polyamid/Polyolefin-recyclat kann ein Regenerat (nach Umschmelzprozeß mit Zusätzen granuliert), ein Regranulat (nach Umschmelzprozeß ohne Zusätze granuliert) oder ein Agglomerat (ohne Zusätze) sein, die aus Folienabfällen hergestellt wurden. Der Polyamidanteil im Recyclat beträgt 3 bis 45 Gew.-%. Das Polyamid ist entweder aliphatisches Polyamid wie PA 6, PA 11, PA 12, PA 66, PA 6.66, PA 6.8, PA 6.9, PA 6.10, PA 6.11, PA 6.12, oder ein Copolymer aus den darin enthaltenen Monomereinheiten oder eine Mischung der genannten aliphatischen Polyamide. Der polyolefinische Anteil setzt sich aus Polymeren wie hochdichtem, mitteldichtem, niederdichtem und linearem niederdichten Polyethylen, Polypropylen und Polypropylen-Copolymeren, Ethylen/Vinylacetat-Copolymeren, Ethylen/Vinylalkohol-Copolymeren, Ethylen/Acrylacetat-Copolymeren, Ethylen/Methylacrylacetat-Copolymeren, Ionomeren sowie Klebstoffresten aus kaschierten Folienverbunden zusammen.

Der Haftvermittler ist ein anhydridmodifiziertes Polyolefin oder ein anhydridmodifiziertes Ethylen/Vinylacetat-Copolymeres. Vorzugsweise ist das ein auf Ethylen-, Propylen- oder Ethylen/Vinylacetat-Basis mit Maleinsäureanhydrid gepfropftes Polymer.

Als Siegelschichtmaterial wird ein üblicher Siegelrohstoff eingesetzt. Dies kann ein Polyethylen, Polypropylen, Polypropylen-Copolymer, ein Ethylen/Vinylacetat-Copolymer, ein Ethylen/Acrylsäure-Copolymer, ein Ethylen/Methylenacrylsäure-Copolymer oder Ionomer oder aber ein Blend aus den genannten Polymeren sein.

Die Begleitschicht zwischen Siegel- und Scrapschicht oder auf der der Siegelschicht abgewandten Seite angeordnet, bietet die Möglichkeit das Eigenschaftsprofil der Folie (z. B. Optik, Barriereeigenschaften etc.) zu variieren. Als Begleitschicht kann Polyamid (zur Erzielung brillianter Optik Polyamid außen liegend), Polyolefin (zur Erzielung hervorrangeder Wasserdampfbarriere), ein mit Haftvermittler angereichertes Gemisch aus Polyamid und Polyolefin (variabel einstellbares Eigenschaftsprofil) oder eine Struktur mit dem Aufbau Polyamid/EVOH/Polyamid (hervorragende Sauerstoffbarriere) eingesetzt werden.

Übertaschenderweise ist es durch den erfindungsgemäßen Aufbau der Folie gelungen, die besonderen Anforderungen an Tiefziehbarkeit und Siegelbarkeit zu erfüllen. Es war nicht zu erwarten, daß ein Gemisch aus miteinander unverträglichen Polymeren unter Zugabe geringer Haftvermittlermengen in einer Schicht verarbeitet, mit einer angrenzenden Begleitschicht, sich in einem Mehrschichtverbund tiefziehen ließ. Weiterhin ist erstaunlich, daß die Scrapschicht Recyclat auf Basis von Polyamid und Polyolefnen enthalten kann, das nicht aus derselben Folie stammen muß. Überraschenderweise ergibt die Folie im ursprünglichen wie auch im tiefgezogenen Zustand ein vergleichbar optisch homogenes Bild.

Die Herstellung der beanspruchten Folie erfolgt zweckinäßigerweise durch Coextrusion. Besteht nicht die Möglichkeit der Coextrusion, so sind die einzelnen Schichten als Einschichtfolien zu fertigen und anschließend über Klebkaschierung zu verbinden. Auch eine Kombination der Vorgehensweisen ist denkbar. Es kommen bekannte nach dem Stand der Technik übliche Anlagenkonzepte zur Anwendung.

Zur Beurteilung der Erfindung wurde als wesentliches Merkmal die Tiefziehbarkeit herangezogen. Zur Ermittlung der Tiefziehbarkeit wurden die zuvor gefertigten Folienmuster auf modernen Tiefziehautomaten, wie sie in der Verpackungsindustrie Anwendung finden (z.B. Tiromat, Multivac), getestet. Dazu wurden in der Maschine eingespannte Folienbahnen abschnittweise über eine Heizplatte erwärmt. Die Wärme kann dazu entweder von der Siegeiseite oder auch von der der Siegelseite abgewandten Seite der Folie erfolgen. Die mit Heizplattentemperaturen von 100-110°C vorgewärmten Folien wurden anschließend durch Anlegen eines Vakuums in eine Mulde mit dem Rahmenmaß 185 x 115 mm gezogen. Die Tiefe der Mulde wurde zwischen 20 und 70 mm variiert.

Das Tiefziehergebnis wurde dazu wie folgt beurteilt:
1. Das Tiefziehergebnis ist ungenügend, jeder Versuch eine Mulde zu formen führt zu Aufrissen in der Folie:
   Merkmal "--"
2. Das Tiefziehergebnis ist mangelhaft, eine nicht akzeptable Anzahl von Versuchen eine Mulde zu formen, führt zu Aufrissen in der Folie
   Merkmal "-"
3. Das Tiefziehergebnis ist gut, es treten keine Aufrisse auf und die Ausformung der Mulde ist gut:
   Merkmal "+"

Parallel zur Beurteilung der Tiefziehbarkeit mittels Tiefziehversuch wurde die Reißdehnung nach DIN 53 455 ermittelt. Unter Reißdehnung wird die Längenänderung der Probe in mm bei Reißkraft bezogen auf die ursprüngliche Meßlänge in mm verstanden (siehe Definition in DIN 53 455). Dazu wurden Zugversuche nach der genannten DIN durchgeführt. Es wurden 15 mm breite Proben bei 23°C und 50 % relativer Luftfeuchte untersucht. Die Prüfgeschwindigkeit betrug 100 mm/min.

### A. Beispiel 1:

Mehrschichtige Folie mit dem Aufbau
**PA-PO-HV / Scrap / EVA**
15 / 105 / 50 µm

Die Folie ist durch Coextrusion hergestellt worden. PA-PO-HV ist ein Polyamid/Polyolefin/Haftvermittlergemisch, bestehend aus 35 Gew.-% Polyamid 6, 10 Gew.-% maleinsäureanhydridgepfropftem, LLDPE-basierendem Polymer als Haftvermittler und 55 Gew.-% niederdichtem Polyethylen (Dichte 923 kg/m³). Die Scrapschicht wies einen Haftvermittleranteil von 20 Gew.-% und einen Recyclatanteil von 80 Gew.-% auf. Als Haftvermittler wurde der gleiche wie auch in der PA-PO-HV-Schicht verwendet. Der Polyamidanteil im Recyclat betrug 33 Gew.-%. EVA ist ein Ethylen/Vinylacetat-Copolymeres mit einem Vinylacetatgehalt von 5 Gew.-%.

### B. Beispiel 2:

Mehrschichtige Folie mit dem Aufbau
**Scrap/HV/PA/K/PE/EVA**
100 / 10 / 20 / -/ 20 / 40 µm

Der Aufbau Scrap/HV/PA ist als Flachfilm-Coextrusion und der Aufbau PE/EVA als Blasfolien-Coextrusion hergestellt worden. Anschließend wurden die genannten Aufbauten über Klebkaschierung mitenander verbunden. Die Scrapschicht wies einen Haftvermittleranteil von 20 Gew.-% und einen Recyclatanteil von 80 Gew.-% auf. Als Haftvermittler wurde ein maleinsäureanhydridgepfropftes, LLDPE-basierendes Polymer eingesetzt. Der Polyamidanteil im Recyclat betrug 33 Gew.-%. HV ist ein Haftvermittler und das gleiche Polymer wie der Haftvermittler in der Scrapschicht. Das eingesetzte Polyamid (PA) war ein Polyamid 6. Der Klebstoffsystem (K) war ein lösungsmittelhaltiges, aromatisches 2-Komponenten-Polyurethan-Klebstoffsystem. PE ist ein handelsübliches niederdichtes Polyethylen, EVA ein Ethylen/Vinylacetat-Copolymeres mit einem Vinylacetatgehalt von 5 Gew.-%.

### C. Beispiel 3:

Mehrschichtige Folie mit dem Aufbau
**PA/HV/Scrap/K/PE/EVA**
20 / 10 / 100 / - / 20 / 40 µm

Der Aufbau Scrap/HV/PA ist als Flachfilm-Coextrusion und der Aufbau PE/EVA als Blasfolien-Coextrusion hergestellt worden. Anschließend wurden die genannten Aufbauten über Klebkaschierung miteinander verbunden. Die Scrapschicht wies einen Haftvermittleranteil von 20 Gew.-% und einen Recyclatanteil von 80 Gew.-% auf. Als Haftvermittler wurde maleinsäureanhydridgepfropftes, LLDPE-basierendes Copolymer eingesetzt. Der Polyamidanteil im Recyclat betrug 33 Gew.-%. HV ist ein Haftvermittler und das gleiche Polymer wie der Haftvermittler in der Scrapschicht Das eingesetzte Polyamid (PA) war ein Polyamid 6. Der Klebstoffsystem (K) war ein lösungsmittelhaltiges, aromatisches 2-Komponenten-Polyurethan-Klebstoffsystem PE ist ein handelsübliches niederdichtes Polyethylen, EVA ein Ethylen/ Vinylacetat-Copolymeres mit einem Vinylacetatgehalt von 5 Gew.-%.

### D. Vergleichsbeispiel 1:

Einschichtige Folie mit dem Aufbau
**Scrap**
70 µm

Die Folie ist als einschichtige Folie extrudiert worden. Die Scrapschicht wies einen Haftvermittleranteil von 15 Gew.-% und einen Recyclatanteil von 85 Gew.-% auf. Der Haftvermittler war ein malensäureanhydridgeprropftes Polymer auf LLDPE-Basis. Der Polyamidanteil im Recyclat betrug 33 Gew.-%.

### E. Vergleichsbeispiel 2:

Einschichtige Folie mit dem Aufbau
**Scrap**
70 µm

Die Folie ist als einschichtige Folie extrudiert worden. Die Scrapschicht wies einen Haftvermittleranteil von 15 Gew.-% und einen Recyclatanteil von 85 Gew.-% auf. Der Haftvermittler war ein maleinsäureanhydridgepfropftes Polymer auf LLDPE-Basis. Der Polyamidanteil im Recyclat betrug 33 Gew.-%.

Für die beschriebenen Folien A, B, C, D und E wurden die Reißdehnung nach DIN 53 455 ermittelt und das Tiefziehverfahren beurteilt, wie zuvor beschrieben. Das Ergebnis zeigt Tabelle 1.

**Tabelle 1**

| Vergleich der Folienaufbauten A, B, C, D und E | | | |
|---|---|---|---|
| | Reißdehnung [%] | Tiefziehergebnis | Haftvermittler-Anteil im Scrap |
| A. Beispiel 1 | 485 +/- 19 | + | 20 Gew.-% |
| B. Beispiel 2 | 464 +/- 9 | + | 20 Gew.-% |
| C. Beispiel 3 | 396 +/- 26 | + | 20 Gew.-% |
| D. Vergleich 1 | 336 +/- 37 | - | 15 Gew.-% |
| E. Vergleich 2 | 36 +/- 24 | -- | < 1 Gew.-% |

Es wird deutlich, daß die Einschichtfolie E, die praktisch ohne Haftvermittler gefertigt wurde, nicht tiefziehbar ist. Folie D zeigt, daß der Zusatz von Haftvermittler allein ebenfalls keine ausreichende Tiefziehbarkeit bewirkt. Die Folien A, B und C, die erfindungsgemäß hergestellt wurden, ergaben erstaunlicherweise tiefziehbare Folien.

Die gemessene Reißdehnung unterstreicht noch einmal das ermittelte Tiefziehergebnis: Die tiefziehbaren Folien A, B und C weisen deutlich höhere Reißdehnungen auf, als die nicht tiefziehbaren Folien D und E.

## Patentansprüche

1. Mehrschichtige, siegelbare Recyclingfolie bestehend aus mindestens einer Scrapschicht, einer Siegelschicht und einer Begleitschicht, die entweder zwischen der Scrapschicht und der Siegelschicht oder außen liegend auf der der Siegelschicht abgewandten Seite angeordnet ist, dadurch gekennzeichnet, daß
- die Folie tiefziehbar ist,
- die Scrapschicht aus Polyamid/Polyolefin-Recyclat und einem Haftvermittler besteht, wobei der Recyclatanteil der Scrapschicht 60 bis 98 Gew.-% und der Haftvermittleranteil 2 bis 40 Gew.-% beträgt,
- das Recyclat einen Polyamidanteil von 3 bis 45 Gew.-% aufweist,
- die Siegelschicht ein- oder mehrschichtig aufgebaut ist und aus polyolefinischem Polymer oder Copolymer besteht, wobei die Schichten gegebenfalls gleich oder unterschiedlich sind,
- die Begleitschicht aus Polyamid, Polyolefin EVOH und/oder Haftvermittler bzw. Haftvermittlergemisch besteht.

2. Folie nach Anspruch 1, dadurch gekennzeichnet, daß die Folie durch Klebkaschierung, Extrusion, Coextrusion Extrusionskaschierung und/oder Extrusionsbeschichtung, hergestellt ist, wobei die Folie gegebenenfalls zusätzliche Zwischenschichten aus Haftvermittler enthält.

3. Folie nach Ansprüchen 1 und 2, dadurch gekennzeichnet, daß das polyolefinischem Polymer oder Copolymer der Siegelschicht ein Polyethylen, Polypropylen, Polypropylen-Copolymer, Ethylen/Vinylacetat-Copolymer, Ethylen/Acrylsäure-Copolymer, Ethylen/Methylen-acrylsäure-Copolymer oder Ionomer oder aber einem Blend aus den genannten Polymeren ist

4. Folie nach Anspruch 1 bis 3, dadurch gekennzeichnet, daß das Recyclat ein Regenerat, ein Regranulat oder ein Agglomerat auf Basis von Polyamid/Polyolefn-Folienabfällen oder ein Gemisch aus zwei bzw. drei der genannten Recyclatmodfikationen ist.

5. Folie nach Ansprüchen 1 bis 4, dadurch gekennzeichnet, daß ein Polyamid/ Polyolefin/Haftvermittlergemisch aus 10 bis 60 Gew.-% Polyamid, vorzugsweise 20 bis 40 Gew.-%, aus 40 bis 80 Gew.-% Polyolefin, vorzugsweise 50 bis 70 Gew.-% und aus 5 bis 30 Gew.-% Haftvermittler, vorzugsweise 5 bis 15 Gew.-% besteht.

6. Folie nach Ansprüchen 1 bis 5, dadurch gekennzeichnet, daß das Polyamid aus den aliphatischen Polyamiden wie PA 6, PA 11, PA 12, PA 66, PA 6.66, PA 6.8, PA 6.9, PA 6.10, PA 6.11, PA 6.12, einem Copolymer aus den darin enthaltenen Monomereinheiten oder aus einer Mischung der genannten aliphatischen Polyamide besteht.

7. Folie nach Ansprüchen 1 bis 6, dadurch gekennzeichnet daß der Haftvermittler ein anhydridmodifiziertes Polyolefin oder ein anhydridmodifiziertes Ethylen/Vinylacetat-Copolymers ist.

8. Folie nach Ansprüchen 1 bis 7, dadurch gekennzeichnet, daß die Scrapschicht 20 bis 80 %, vorzugsweise 40 bis 60 %, die Siegelschicht 10 bis 50 %, vorzugsweise 20 bis 40 % und die Begleitschicht 0 bis 50 %, vorzugsweise 10 bis 30 % der Foliendicke aufweist.

9. Folie nach Ansprüchen 1 bis 8, dadurch gekennzeichnet, daß die Folie eine Gesamtdicke von 0,050 bis 0,500 mm, vorzugsweise von 0,080 bis 0,4 mm aufweist

10. Folie nach Ansprüchen 1 bis 9, dadurch gekennzeichnet, daß sie den Aufbau Trägerschicht / Sandwichschicht / Polyolefin / Zwischenschicht / Polyolefin aufweist, wobei entweder die Sandwichschicht oder die Zwischenschicht oder beide eine Serapschicht sind und die Trägerschicht den Aufbau Polyamid / Haftvermittler / Polyamid / Haftvermittler oder Polyamid / Haftvermittler oder Polyamid / EVOH / Polyamid aufweist oder aus ein oder mehreren Polyamidschichten besteht, wobei gegebenenfalls zur Verbindung von Polyamid und Sandwichschicht ein Primer oder Kleber zu verwenden ist.

11. Folie nach Anspruch 10, dadurch gekennzeichnet, daß entweder die Zwischenschicht oder die Sandwichschicht nicht vorhanden sind.

12. Folie nach Ansprüchen 1 bis 11, dadurch gekennzeichnet, daß mindestens eine Schicht eingefärbt und/oder bedruckt ist.

13. Verwendung der Folie gemäß einem der Ansprüche 1 bis 12, dadurch gekennzeichnet, daß die Folie zur Verpackung von medizinisch-.technischen Geräten, Halbzeugen und Fertigteilen oder zur Verpackung von Lebensmitteln eingesetzt wird.

## Claims

1. A multilayer sealable recycled film comprising at least one scrap layer, one sealing layer and one accompanying layer disposed either between the scrap layer and the sealing layer or externally on the side remote from the sealing layer, characterised in that
- the film is deep-drawable,
- the scrap layer consists of recycled polyamide/polyolefin and a primer, the proportion of recycled material in the scrap layer being 60 to 98 wt.% and the proportion of primer being 2 to 40 wt.%,
- the recycled material contains 3 to 45 wt.% of polyamide,
- the sealing layer is in one or more layers and consists of polyolefinic polymer or copolymer, the layers optionally being the same or different, and
- the accompanying layer is of polyamide, polyolefin EVOH and/or primer or primer mixture.

2. A film according to claim 1, characterised in that the film is produced by adhesive lamination, extrusion, co-extrusion, extrusion coating and/or extrusion lining, the film optionally containing additional intermediate layers of primer.

3. A film according to claims 1 and 2, characterised in that the polyolefinic polymer or copolymer in the sealing layer is a polyethylene, polypropylene, polypropylene copolymer, ethylene/vinyl acetate copolymer, ethylene/acrylic acid copolymer, ethylene/methylene acrylic acid copolymer or ionomer or a blend of the aforementioned polymers.

4. A film according to claims 1 to 3, characterised in that the recycled material is regenerated, regranulated or agglomerated on the basis of polyamide/polyolefin film waste or is a mixture of two or three of the aforementioned recycled materials.

5. A film according to claims 1 to 4, characterised in that the polyamide/polyolefin/primer mixture comprises 10 to 60 wt.%, preferably 20 to 40 wt.% of polyamide, 40 to 80 wt.%, preferably 50 to 70 wt.% of polyolefin, and 5 to 30 wt.%, preferably 5 to 15 wt.% of primer.

6. A film according to claims 1 to 5, characterised in that the polyamide consists of aliphatic polyamides such as PA 6, PA 11, PA 12, PA 66, PA 6.66, PA 6.8, PA 6.9, PA 6.10, PA 6.11 or PA 6.12, or a copolymer of the monomer units therein or a mixture of the aforementioned aliphatic polyamides.

7. A film according to claims 1 to 6, characterised in that the primer is an anhydride-modified polyolefin or an anhydride-modified ethylene/vinyl acetate copolymer.

8. A film according to claims 1 to 7, characterised in that the scrap layer makes up 20 to 80%, preferably 40 to 60% of the thickness of the film, and the sealing layer makes up 10 to 50%, preferably 20 to 40% and the accompanying layer makes up 0 to 50%, preferably 10 to 30%.

9. A film according to claims 1 to 8, characterised in that the film has a total thickness of 0.050 to 0.500 mm, preferably 0.080 to 0.4 mm.

10. A film according to claims 1 to 9, characterised in that it has the structure: carrier layer / sandwich layer / polyolefin / intermediate layer / polyolefin, wherein either the sandwich layer or the intermediate layer or both are scrap layers and the carrier layer has the structure: polyamide / primer / polyamide / primer or polyamide / primer or polyamide / EVOH / polyamide or consists of one or more polyamide layers, a primer or adhesive optionally being used for bonding the polyamide and the sandwich layer.

11. A film according to claims 1 to 10, characterised in that either the intermediate layer or the sandwich layer is absent.

12. A film according to claims 1 to 11, characterised in that at least one layer is coloured and/or printed.

13. Use of the film according to any of claims 1 to 12, characterised in that the film is used as packaging for industrial medical equipment, semi-finished products and finished products or for packaging of food.

## Revendications

1. Feuille de recyclage multicouche thermosoudable constituée par au moins une couche de déchets, par une couche thermosoudable et par une couche secondaire qui est disposée, soit entre la couche de déchets et la couche thermosoudable, soit à l'extérieur sur le côté se détournant de la couche thermosoudable, caractérisée en ce que
- la feuille manifeste une aptitude à l'emboutissage,
- la couche de déchets est constituée par un produit de recyclage de polyamide/polyoléfine et par un agent adhésif, la fraction du produit de recyclage de la couche de déchets s'élevant de 60 à 98% en poids et la fraction de l'agent adhésif s'élevant de 2 à 40% en poids,
- le produit de recyclage présente une fraction de polyamide de 3 à 45% en poids,
- la couche thermosoudable est composée d'une ou de plusieurs couches et est constituée d'un polymère ou d'un copolymère polyoléfinique, les couches étant le cas échéant identiques ou différentes,
- la couche secondaire est constituée par du polyamide, par de la polyoléfine, par du EVOH et/ou par un agent adhésif, respectivement par un mélange d'agents adhésifs.

2. Feuille selon la revendication 1, caractérisée en ce qu'on prépare la feuille par contrecollage, par extrusion, par coextrusion, par contrecollage par extrusion et/ou par enduction par extrusion, la feuille contenant le cas échéant des couches intermédiaires supplémentaires constituées par des agents adhésifs.

3. Feuille selon les revendications 1 et 2, caractérisée en ce que le polymère ou le copolymère polyoléfinique de la couche thermosoudable représente du polyéthylène, du polypropylène, un copolymère de polypropylène, un copolymère d'éthylène/acétate de vinyle, un copolymère d'éthylène/acide acrylique, un copolymère d'éthylène/méthylène/acide acrylique ou un ionomère ou encore un mélange homogène des polymères mentionnés.

4. Feuille selon les revendications 1 à 3, caractérisée en ce que le produit de recyclage est un produit de régénération, un nouveau produit de granulation ou un agglomérat à base de déchets de feuille de polyamide/polyoléfine ou un mélange de deux, respectivement de trois des modifications du produit de recyclage mentionnées.

5. Feuille selon la revendications 1 à 4, caractérisée en ce qu'un mélange de polyamide/polyoléfine/agent adhésif est constitué par du polyamide à concurrence de 10 à 60% en poids, de préférence de 20 à 40% en poids, par de la polyoléfine à concurrence de 40 à 80% en poids, de préférence de 50 à 70% en poids, et par un agent adhésif à concurrence de 5 à 30% en poids, de préférence de 5 à 15% en poids.

6. Feuille selon les revendications 1 à 5, caractérisée en ce que le polyamide est constitué par les polyamides aliphatiques tels que PA 6, PA 11, PA 12, PA 66, PA 6.66, PA 6.8, PA 6.9, PA 6.10, PA 6.11, PA 6.12, par un copolymère des unités monomères qui y sont contenues ou par un mélange des polyamides aliphatiques mentionnés.

7. Feuille selon les revendications 1 à 6, caractérisée en ce que l'agent adhésif est une polyoléfine modifiée par un anhydride ou encore un copolymère d'éthylène/acétate de vinyle modifié par un anhydride.

8. Feuille selon les revendications 1 à 7, caractérisée en ce que la couche de déchets représente de 20 à 80%, de préférence de 40 à 60%, la couche thermosoudable représente de 10 à 50%, de préférence de 20 à 40%, et la couche secondaire représente de 0 à 50%, de préférence de 10 à 30% de l'épaisseur de la feuille.

9. Feuille selon les revendications 1 à 8, caractérisée en ce que la feuille présente une épaisseur totale de 0,050 à 0,500 mm, de préférence de 0,080 à 0,4 mm.

10. Feuille selon les revendications 1 à 9, caractérisée en ce qu'elle présente la composition couche de support/couche sandwich/polyoléfine/couche intermédiaire/polyoléfine, soit la couche sandwich, soit la couche intermédiaire, soit les deux présentant une couche de déchets et la couche de support présente la structure polyamide/agent adhésif/polyamide/agent adhésif ou la structure polyamide/agent adhésif ou encore la structure Polyamide/EVOH/polyamide ou est constituée par une ou plusieurs couches de polyamide, une couche de fond ou un adhésif devant être le cas échéant utilisé pour relier le polyamide et la couche sandwich.

11. Feuille selon la revendication 10, caractérisée en ce que, soit la couche intermédiaire, soit la couche sandwich ne sont pas présentes.

12. Feuille selon l'une quelconque des revendications 1 à 11, caractérisée en ce qu'au moins une couche est colorée et/ou imprimée.

13. Utilisation de la feuille selon l'une quelconque des revendications 1 à 12, caractérisée en ce que la feuille est mise en oeuvre pour l'emballage d'appareils, de produits semi-finis et d'articles prêts à l'emploi dans le domaine médical-technique ou encore pour l'emballage de denrées alimentaires.
